# EUROPÄISCHE PATENTSCHRIFT

(11) **EP 2 980 313 B1**
(45) Veröffentlichungstag und Bekanntmachung des Hinweises auf die Patenterteilung: **07.09.2016**
(21) Anmeldenummer: 14002632.9
(22) Anmeldetag: 29.07.2014
(51) Int. Cl.: B32B 7/12, B32B 21/10, D21H 27/26, B32B 21/02, B32B 38/00, B44C 5/04, D21H 19/16, D21H 19/20

(54) **Verfahren zur Herstellung eines Imprägnats, Imprägnat und Verfahren zur Herstellung eines Laminats aus dem Imprägnat**
Method for producing an impregnates, impregnate and method for producing a laminates from the impregnate
Procédé de fabrication d'un élément imprégné, élément imprégné et procédé de fabrication d'un aggloméré laminé à partir d'un élément imprégné

(43) Veröffentlichungstag der Anmeldung: 03.02.2016
(73) Patentinhaber: Flooring Technologies Ltd., Pieta PTA 9044 (MT)
(72) Erfinder: Oldorff, Frank, 19057 Schwerin (DE)
(74) Vertreter: Rehmann, Thorsten

(56) Entgegenhaltungen:
- WO-A1-2009/077561
- GB-A- 1 421 210
- US-A- 2 964 426

## Beschreibung

Die Erfindung betrifft ein Verfahren zur Herstellung eines Imprägnats mit einer eine Oberseite und eine Unterseite aufweisenden Zelluloselage, die zur Ausbildung einer Kernimprägnierung mit einem härtbaren, wasserbasierten Harz imprägniert ist, mit den Schritten: vollständiges Tränken der Zelluloselage mit dem härtbaren Harz und Entfernen des sich auf einer Oberfläche ausbildenden überschüssigen Harzes von zumindest der Oberseite oder der Unterseite, ein so hergestelltes Imprägnat und ein Verfahren zur Herstellung eines Laminats aus diesem Imprägnat.

Ein solches Verfahren zur Herstellung eines Imprägnats ist beispielsweise aus der GB 1,421,210 A oder der US 2,964,426 A bekannt.

Imprägnate werden insbesondere als Vorprodukte bei der Herstellung von Laminaten verwendet. Laminate werden beispielsweise in der Holzwerkstoffindustrie zur Beschichtung von Holzwerkstoffplatten verwendet. Für eine Kernimprägnierung ist die Zelluloselage mit einem Melaminharz getränkt, das thermisch härtbar ist, sodass das Imprägnat mit einer Holzwerkstoffplatte oder anderen Imprägnaten, insbesondere Spezialpapieren oder Kraftpapieren verpresst werden kann. Das fertige Imprägnat ist also zunächst ein Vorprodukt, das in einer oder mehreren Lagen auf die zu beschichtende Holzwerkstoffplatte, beispielsweise eine Spanplatte oder mitteldichte bzw. hochdichte Faserplatte (MDF, HDF) direkt aufgepresst wird. Nach dem Verpressen erhält man eine chemisch, thermisch und mechanisch hochbelastbare Beschichtung. Das Imprägnat kann entweder im Kurztaktverfahren oder im Durchlaufverfahren mit der Holzwerkstoffplatte verpresst werden.

Solche Laminate lassen sich zu Wand-, Boden- oder Deckenpaneelen, Küchen- oder Möbelfronten sowie Arbeitsplatten verarbeiten.

In der DE 100 35 924 B4 ist ein Imprägnat und ein Verfahren zur Herstellung des Imprägnats beschrieben. Sogenannte Imprägnierkanäle werden als industrielle Anlagen für die Herstellung der Imprägnate verwendet. In diesen Imprägnierkanälen ist eine kontinuierliche Herstellung möglich, indem die Zelluloselage eine oder mehrere mit Imprägnierfluiden gefüllte Wannen durchläuft. Auch ist es bekannt, Imprägnierfluid über Walzen und Rakel aufzutragen oder über Düsen aufzusprühen. Die noch feuchte Zelluloselage erfährt unmittelbar im Anschluss daran eine Trocknung, um das überschüssige Wasser und/oder Lösemittel bis auf eine definierte Restfeuchte zu verdunsten und ein trockenes, lagerstabiles und maschinell verarbeitbares Imprägnat zu erhalten. Am Ende des Imprägnierkanals wird das kontinuierlich ablaufende Imprägnat entweder zu Blättern geschnitten oder zu einer Rolle aufgewickelt.

Dieses Imprägnat ist ein Halbzeug, das in ein oder mehreren Lagen auf zu beschichtende Holzwerkstoffplatten wie beispielsweise Span- oder Faserplatten (MDF, HDF) direkt aufgepresst wird. Man erhält dann eine chemisch, thermisch und mechanisch hoch belastbare Beschichtung. Das Imprägnat kann mit der Trägerplatte entweder im Kurztaktverfahren oder im Durchlaufverfahren verpresst werden. Auch kann das Imprägnat mit anderen Imprägnaten verpresst werden. Wird dieses Imprägnat als Dekorpapier verwendet, wird auf seine Oberseite ein Dekor aufgedruckt, das Dekor anschließend mit einer Schutzschicht abgedeckt und dieses Dekorpapier dann der weiteren Verarbeitung zugeführt oder es wird zwischengelagert. Das Imprägnat kann zum Bedrucken von einer Rolle abgezogen, bedruckt und anschließend wieder zu einer Rolle aufgewickelt oder in einzelne Bögen geschnitten werden. Auch können einzelne Bögen bedruckt werden, die nach dem Trocknen übereinander abgestapelt werden, bis sie der weiteren Verarbeitung zugeführt werden. Damit das Dekor beim Aufwickeln bzw. Abstapeln nicht verwischt oder zerstört wird, muss die Oberfläche des Imprägnats vor dem Bedrucken sorgfältig behandelt werden. Auf die Harzschicht, die sich auf der Oberseite bzw. Unterseite der Zelluloselage ausgebildet hat, muss ein Primer aufgebracht werden, der die Verbindung der Druckfarbe zur Zelluloselage sicherstellt. Das Aufbringen des Primers erfordert einen zusätzlichen Arbeitsschritt und zusätzliches Material, was die Herstellung verteuert.

In der EP 2 274 485 B1 ist ein Druckpapier beschrieben, bei dem auf die Faserstruktur der eigentlichen Papierschicht eine Farbaufnahmeschicht aufgebracht ist. Diese Farbaufnahmeschicht weist als Hauptbestandteile Siliziumdioxid und Titandioxid auf, ist vollflächig auf die Oberseite der Papierstruktur aufgebracht und liegt auf dieser, die Papierstruktur vollständig über- und verdeckend, auf. Beim späteren Bedrucken greift die Farbaufnahmeschicht zwar oberflächlich in die Zellulosefaser ein, sie ist jedoch im Wesentlichen über der Faserstruktur angeordnet und verschließt die zwischen den Fasern befindlichen Zwischenräume. Um die Bedruckbarkeit dieser Zelluloselage zu verbessern, ist vorgesehen, dass oberseitig in der Faserstruktur eine Farbaufnahmemasse vorgesehen ist, die den oberseitigen Bereich der Fasern zumindest im Wesentlichen ummantelt, und das an der Oberseite der Zelluloselage offene Zwischenräume der ummantelten Faserstruktur verbleiben, also nicht von der Farbaufnahmemasse verdeckt sind.

Insbesondere wasserbasierte Farben sind nur sehr schwierig auf die versiegelte Oberfläche des Imprägnats aufzubringen. Der Primer muss eine dauerhafte Verbindung der Druckfarbe gewährleisten. Das Dekor ist nicht nur bei der Lagerung des Imprägnats abwischgefährdet, sondern wenn mehrere Imprägnate anschließend zu einem Laminat verpresst werden, fließen die Harze aus den verschiedenen Zelluloselagen ineinander und verbinden sich. Dabei darf sich das Dekor nicht auflösen und verlaufen. Dies ist umso komplizierter, je filigraner ein Dekor ist (z. B. eine Holzmaserung). Der Herstellungsprozess eines Dekorpapiers als Imprägnat ist folglich sehr aufwendig und es müssen, um die Prozesssicherheit zu gewährleisten, teilweise teure Spezialpapiere, die zumindest auf einer Seite speziell behandelt sind (Fotopapier) benutzt werden. Das verteuert das Imprägnat weiter.

Von dieser Problemstellung ausgehend soll ein Verfahren geschaffen werden, mit dem ein Imprägnat hergestellt wird, das einfach, insbesondere mit wasserbasierten Farben bedruckt werden kann, ohne dass es einer besonderen zusätzlichen Behandlung vor dem Aufdrucken des Dekors bedarf.

Die Problemlösung erfolgt erfindungsgemäß bei einem gattungsgemäßen Verfahren zur Herstellung des Imprägnats durch den anschließenden Schritt:
Trocknen der getränkten Zelluloselage derart, dass nach dem Verdunsten des Wassers aus dem Harz die Zellulosefasern an der Oberseite und/oder Unterseite, von der das überschüssige Harz entfernt wurde, über eine Höhe von 1 bis 20 µm freiliegen.

Durch diese Ausgestaltung erfolgt das Imprägnieren mit Tränkharz zunächst in bekannter Weise. Die Zelluloselage kann als Blatt oder als Endlosbahn vorliegen und wird durch wenigstens ein Tauchbad gezogen, wobei sie sich dabei mit dem Harz vollsaugt. Dann wird das überschüssige Harz, das sich an der Oberseite bildet vollständig entfernt. Hierzu kann die Oberseite abgezogen oder abgerakelt werden. Das Harz schließt dann in einer Ebene mit den Faserspitzen ab. Beim anschließenden Trocknen auf eine vorzugsweise definierte Restfeuchte von 4 bis 7 %, insbesondere vorzugsweise 5 %, verdunstet das Wasser und das Harz zieht sich nach innen in die Kernlage zurück. Je nach Sättigungsgrad und Harzart liegen die Zellulosefasern dann in einer Höhe von 1 bis 20 µm frei. Die Zellulosefasern sind dabei mit Harz gefüllt, aber nicht von Harz eingeschlossen. Damit wird eine hervorragende Grundlage geschaffen, um das Imprägnat später mit einer wasserbasierten Farbe zu bedrucken. Die freiliegenden Fasern können die flüssige Farbe aufnehmen, dabei aber nicht quellen, weil sie durch das Harz imprägniert sind. Die Oberfläche des Imprägnats bleibt dadurch glatt. Beim anschließenden Trocknen der Farbe bleiben die Pigmente in den Zellulosefasern zurück. Da jede einzelne Faser eingefärbt ist, stellt sich ein sehr klares Dekor ein, das, weil jede Faser frei liegt und nicht in einen Melaminharzverbund integriert ist, nicht nur wischfest ist, sondern auch beim späteren Verpressen des Imprägnats zu einem Laminat nicht mehr verlaufen kann.

Dadurch dass jede einzelne Zellulosefaser mit einer wasserbasierten Farbe bedruckt wird, jede einzelne Faser aber zumindest teilweise mit Harz imprägniert ist, kann eine minimale Auflösung erzielt und somit ein scharfes Druckbild erzeugt werden, das wie in der Natur üblich nicht absolut begrenzt ist. Durch die einzelne Imprägnierung in der Faser wird wesentlich weniger Druckfarbe als bisher benötigt.

Das Abstreichen des Harzes kann mittels einer Walze geschehen, unter der das Imprägnat als endlose Bahn hindurchgefördert wird. Die Walze dreht sich dabei vorteilhafterweise im Gegenlauf zu der Transportrichtung der Zellulose-Bahn. Auch kann das Harz mittels eines oder mehreren Rakeln abgestrichen werden.

Die freiliegenden Zellulosefasern können teilweise oder vollständig mit Harz gefüllt sein.

Ein Imprägnat, bestehend aus einer Zellulosefasern aufweisenden Zelluloselage, die mit einem Harz imprägniert ist und an deren Oberseite und/oder Unterseite über eine Höhe von 1 bis 20 µm mit dem Harz gefüllte freiliegende Zellulosefasern aufweist, wird durch das erfindungsgemäße Verfahren hergestellt.

Das Harz kann ein Melaminharz, ein Harnstoffharz oder ein Gemisch aus Melamin- und Harnstoffharz sein.

Ein Verfahren zur Herstellung eines Laminats unter Verwendung mindestens eines erfindungsgemäß hergestellten Imprägnats zeichnet sich durch folgende Schritte aus:
a) Aufdrucken eines Dekors mit wasserbasierten Farben auf die die freiliegenden Zellulosefasern aufweisende Oberseite oder Unterseite mittels eines Tintenstrahldruckers,
b) Trocknen der Farben zu einer Dekorschicht,
c) Auftragen mindestens einer Abdeckschicht aus wasserbasiertem Harz auf die trockene Dekorschicht,
d) Trocknen der Dekorschicht,
e) Verpressen des Imprägnats mit weiteren Imprägnaten und/oder einer Trägerplatte zu einem Laminat.

Die weiteren Imprägnate können beispielsweise Kraftpapiere sein. Die Trägerplatte ist vorzugsweise eine Holzwerkstoffplatte, insbesondere eine HDF- oder MDF-Platte oder Spanplatte.

Anhand einer Zeichnung soll ein Ausführungsbeispiel der Erfindung nachfolgend näher beschrieben werden. Es zeigen:
- Figur 1 -: die schematische Seitenansicht einer Zelluloselage nach einer ersten Bearbeitung;
- Figur 2 -: die Ansicht gemäß Figur 1 nach einer weiteren Bearbeitung;
- Figur 3 -: die Teildarstellung gemäß Sichtpfeil III nach Figur 2;
- Figur 4 -: die Darstellung nach Figur 3 nach dem Trocknen;
- Figur 5 -: eine Zellulosefaser als Teildarstellung nach Figur 4;
- Figur 6 -: die schematische Darstellung einer Anlage zur Behandlung einer Zelluloselage.

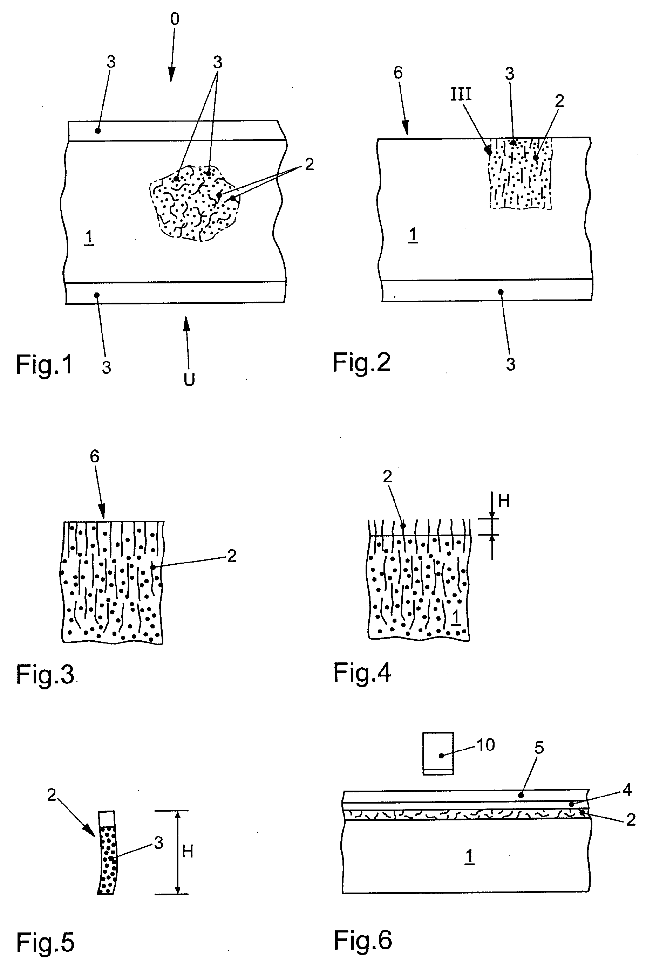

Die Zelluloselage 1 besteht hauptsächlich aus Zellulosefasern 2, die miteinander verbunden sind. Zur Ausbildung einer Kernimprägnierung wird die Zelluloselage 1 mit einem wasserbasierten Melaminharz 3 imprägniert. Hierzu wird die Zelluloselage 1 durch eine oder mehrere mit dem Melaminharz 3 gefüllte Wannen (nicht gezeigt) gezogen, sodass sich die Zelluloselage 1 mit dem Harz 3 voll saugt. Wie Figur 1 zeigt, bilden sich nach Abschluss des Tränkens an der Oberseite O und der Unterseite U Schichten mit Melaminharz 3 aus.

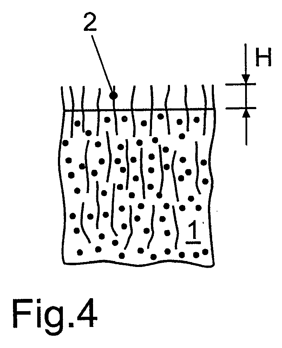

Zumindest von der Oberseite O wird das überschüssige Melaminharz 3 so abgestrichen, dass die Spitzen der Zellulosefasern 2 bündig mit der Oberfläche 6 der Zelluloselage 1 abschließen (vgl. Figuren 2 und 3). Danach wird die Zelluloselage 1 soweit getrocknet, dass das Wasser aus dem Melaminharz 3 verdunstet. Dabei zieht sich das Harz 3 dann in das Innere der Zelluloselage 1 zurück, sodass - wie Figur 4 zeigt - an der Oberfläche 6 einzelne Zellulosefasern 2 mit einer Höhe H von 1 bis 20 µm freiliegen. Mit freiliegender Zellulosefaser 2 ist gemeint, dass die einzelnen Fasern 2 nicht mehr unmittelbar durch das Melaminharz 3 verbunden sind. Jede einzelne Faser 2 hat jedoch zumindest teilweise Melaminharz 3 aufgenommen (vgl. Figur 5). Die Zellulosefaser 2 ist also mit Melaminharz 3 imprägniert und allenfalls an der Oberfläche 6 frei von Harz 3. Diese über die Höhe H freiliegenden Zellulosefasern 2 werden anschließend mittels eines Tintenstrahldruckers 10 mit einem beliebigen Dekor (beispielsweise eine Holzmaserung) bedruckt. Dadurch dass die Zellulosefasern 2 freiliegen, kann jede einzelne Faser 2 Farbe aufnehmen, wodurch ein klares Druckbild geschaffen werden kann, das, weil die Zellulosefasern vereinzelt sind, nach dem Trocknen nicht verwischen kann und auch beim späteren Verpressen des Imprägnats zu einem Laminat nicht mehr zerfließen kann, wenn die Harze schmelzen. Dadurch dass die Zellulosefaser 2 zumindest teilweise mit Melaminharz 3 imprägniert ist, kann sie durch das Aufbringen der wasserbasierten Druckfarbe nicht mehr quellen. Das Druckbild ist folglich sehr klar und auch filigrane Dekorelemente können hervorragend übertragen werden.

Nachdem die mit dem Tintenstrahldrucker 10 aufgebrachte wasserbasierte Farbe zu einer Dekorschicht 4 getrocknet ist, wird auf die Dekorschicht 4 eine Abdeckschicht 5 aufgetragen und auch diese Abdeckschicht 5 wird getrocknet. Das so erhaltene Imprägnat kann mit weiteren Imprägnaten (Kraftpapieren) oder mit einer Holzwerkstoffplatte aus MDF oder HDF zu einem Laminat verpresst werden. Beim Verpressen kann in die Abdeckschicht 5 eine zu dem Dekor synchrone Struktur eingeprägt werden. Die Abdeckschicht 5 kann verschleißhemmende Partikel, beispielsweise Korundpartikel enthalten. Auch können in der Abdeckschicht 5 Glaskugeln als Abstandshalter zwischen den verschleißhemmenden Partikeln und dem - hier nicht gezeigten - Pressblech dienen, um übermäßigen Verschleiß am Pressblech zu vermeiden.

### Bezugszeichenliste

- 1: Zelluloselage
- 2: Zellulosefaser
- 3: Harz/Melaminharz
- 4: Dekorschicht
- 5: Abdeckschicht
- 6: Oberfläche
- 10: Tintenstrahldrucker
- H: Höhe
- O: Oberseite
- U: Unterseite

## Patentansprüche

1. Verfahren zur Herstellung eines Imprägnats mit einer eine Oberseite (O) und eine Unterseite (U) aufweisenden, hauptsächlich aus Zellulosefasern (2) bestehenden Zelluloselage (1), die zur Ausbildung einer Kernimprägnierung mit einem härtbaren, wasserbasierten Harz (3) imprägniert ist, mit den Schritten in folgender Reihenfolge:
a) vollständiges Tränken der Zelluloselage (1) mit dem härtbaren Harz (3),
b) Entfernen des sich auf einer Oberfläche ausbildenden überschüssigen Harzes (3) von zumindest der Oberseite (O) oder der Unterseite (U),
**gekennzeichnet durch**
c) Trocknen der getränkten Zelluloselage (1) derart, dass nach dem Verdunsten des Wassers aus dem Harz (3) die Zellulosefasern (2) an der Oberseite (O) und/oder Unterseite (U), von der das überschüssige Harz (3) entfernt wurde, über eine Höhe (H) von 1 bis 20 µm freiliegen.

2. Verfahren nach Anspruch 1, **dadurch gekennzeichnet, dass** die Zelluloselage (1) auf eine definierte Restfeuchte von vorzugsweise 4 bis 7 %, insbesondere 5 % getrocknet wird.

3. Verfahren nach Anspruch 1 oder 2, **dadurch gekennzeichnet, dass** das überschüssige Harz (3) abgestrichen oder abgerakelt wird.

4. Verfahren nach Anspruch 3, **dadurch gekennzeichnet, dass** das Harz (3) mittels einer sich drehenden Walze abgestrichen oder mittels eines oder mehreren Rakeln angerakelt wird.

5. Verfahren nach Anspruch 1, **dadurch gekennzeichnet, dass** in die freiliegenden Zellulosefasern (2) Harz (3) hineinpenetriert ist.

6. Verfahren nach Anspruch 5, **dadurch gekennzeichnet, dass** die freiliegenden Zellulosefasern (2) mit Harz (3) gefüllt sind.

7. Verfahren nach einem der vorstehenden Ansprüche, **dadurch gekennzeichnet, dass** das Harz (3) ein Melaminharz, ein Harnstoffharz oder ein Gemisch aus Melamin- und Harnstoffharz ist.

8. Imprägnat bestehend aus einer Zellulosefasern (2) aufweisenden Zelluloselage (1), die mit einem Harz (3) imprägniert ist und an deren Oberseite (O) und/oder Unterseite (U) über eine Höhe (H) von 1 bis 20 µm mit Harz (3) gefüllte Zellulosefasern (2) freiliegen.

9. Verfahren zur Herstellung eines Laminats unter Verwendung mindestens eines Imprägnats nach Anspruch 8, **gekennzeichnet durch** folgende Schritte:
a) Aufdrucken eines Dekors mit wasserbasierten Farben auf die die freiliegenden Zellulosefasern (2) aufweisende Oberseite (O) oder Unterseite (U) mittels wenigstens eines Digitaldruckers (10),
b) Trocknen der Farben zu einer Dekorschicht (4),
c) Auftragen mindestens einer Abdeckschicht (5) aus wasserbasiertem Harz auf die trockene Dekorschicht (4),
d) Trocknen der Dekorschicht (4),
e) Verpressen des Imprägnats mit weiteren Imprägnaten und/oder einer Trägerplatte zu einem Laminat.

10. Verfahren nach Anspruch 9, **dadurch gekennzeichnet, dass** die Trägerplatte (5) eine Holzwerkstoffplatte ist.

11. Verfahren nach Anspruch 9 oder 10, **dadurch gekennzeichnet, dass** als Digitaldrucker ein Tintenstrahl- oder Inkjet- oder Laserdrucker oder eine Kombination daraus verwendet wird.

## Claims

1. Method for producing an impregnate with a cellulose layer (1) having an upper side (0) and an underside (U) and consisting mainly of cellulose fibres (2), which is impregnated with a curable, water-based resin (3) in order to form a core impregnate, comprising the steps in the following order:
a) complete soaking of the cellulose layer (1) with the curable resin (3),
b) removal of the excess resin (3) forming on a surface from at least the upper side (0) or the underside (U),
**characterized by**
c) drying of the soaked cellulose layer (1) in such a way that, following the evaporation of the water from the resin (3), the cellulose fibres (2) on the upper side (0) and/or the underside (U) from which the excess resin (3) has been removed are exposed over a height (H) of 1 to 20 µm.

2. Method according to Claim 1, **characterized in that** the cellulose layer (1) is dried to a defined residual moisture content of preferably 4 to 7%, in particular 5%.

3. Method according to Claim 1 or 2, **characterized in that** the excess resin (3) is wiped off or doctored off.

4. Method according to Claim 3, **characterized in that** the resin (3) is wiped off by means of a rotating roll or doctored off by means of one or more doctors.

5. Method according to Claim 1, **characterized in that** resin (3) has penetrated into the exposed cellulose fibres (2).

6. Method according to Claim 5, **characterized in that** the exposed cellulose fibres (2) are filled with resin (3).

7. Method according to one of the preceding claims, **characterized in that** the resin (3) is a melamine resin, a urea resin or a mixture of melamine and urea resin.

8. Impregnate consisting of a cellulose layer (1) having cellulose fibres (2), which is impregnated with a resin (3) and on the upper side (0) and/or underside (U) of which cellulose fibres (2) filled with resin (3) are exposed over a height (H) of 1 to 20 µm.

9. Method for producing a laminate by using at least one impregnate according to Claim 8, **characterised by** the following steps:
a) printing a decoration with water-based inks onto the upper side (0) or underside (U) having the exposed cellulose fibres (2) by means of at least one digital printer (10),
b) drying the inks to form a decorative layer (4),
c) applying at least one covering layer (5) of water-based resin to the dry decorative layer (4),
d) drying the decorative layer (4),
e) pressing the impregnate with further impregnates and/or a substrate board to form a laminate.

10. Method according to Claim 9, **characterized in that** the substrate board (5) is a wood material board.

11. Method according to Claim 9 or 10, **characterized in that** the digital printer used is an inkjet or laser printer or a combination thereof.

## Revendications

1. Procédé de fabrication d'un élément imprégné, comprenant une couche de cellulose (1) présentant une face supérieure (O) et une face inférieure (U) et constituée principalement en fibres de cellulose (2), ladite couche étant imprégnée d'une résine durcissable (3) à base d'eau en vue de former une imprégnation à coeur,
comprenant les étapes dans l'ordre suivant :
a) l'imprégnation complète de la couche de cellulose (1) avec la résine durcissable (3),
b) l'enlèvement de la résine (3) superflue, formée sur une surface, au moins de la face supérieure (O) ou de la face inférieure (U), **caractérisé par**
c) le séchage de la couche de cellulose imprégnée (1) de telle sorte qu'après l'évaporation de l'eau hors de la résine (3) les fibres de cellulose (2) sont à découvert sur une hauteur (H) de 1 à 20 µm sur la face supérieure (O) et/ou sur la face inférieure (U) de laquelle la résine superflue (3) a été enlevée.

2. Procédé selon la revendication 1, **caractérisé en ce que** l'on fait sécher la couche de cellulose (1) jusqu'à une humidité résiduelle définie, de préférence de 4 à 7 %, en particulier de 5 %.

3. Procédé selon la revendication 1 ou 2, **caractérisé en ce que** l'on retire ou on racle la résine superflue (3).

4. Procédé selon la revendication 3, **caractérisé en ce que** l'on retire la résine (3) au moyen d'un rouleau en rotation ou on la racle au moyen d'une ou de plusieurs racles.

5. Procédé selon la revendication 1, **caractérisé en ce qu'**une résine (3) est amenée à pénétrer jusque dans les fibres de cellulose (2) à découvert.

6. Procédé selon la revendication 5, **caractérisé en ce que** les fibres de cellulose (2) à découvert sont remplies de résine (3).

7. Procédé selon l'une des revendications précédentes, **caractérisé en ce que** la résine (3) est une résine de mélamine, une résine d'urée ou un mélange de résine de mélamine et d'urée.

8. Élément imprégné constitué d'une couche de cellulose (1) présentant des fibres de cellulose (2), qui est imprégnée d'une résine (3) et sur la face supérieure (O) et/ou la face inférieure (U) de laquelle, des fibres de cellulose (2) remplies de résine (3) sont à découvert sur une hauteur (H) de 1 à 20 µm.

9. Procédé de réalisation d'un stratifié en utilisant au moins un élément imprégné selon la revendication 8, **caractérisé par** les étapes suivantes :
a) on imprime un décor avec des couleurs à base aqueuse sur la face supérieure (O) ou la face inférieure (U) présentant les fibres de cellulose (2) à découvert au moyen d'au moins une imprimante numérique (10),
b) on fait sécher les couches pour former une couche de décor (4),
c) on dépose au moins une couche de couverture (5) constituée de résine à base aqueuse sur la couche de décor (4) sèche,
d) on fait sécher la couche de décor (4),
e) on fait comprimer l'élément imprégné avec d'autres éléments imprégnés et/ou avec une plaque de support pour former un stratifié.

10. Procédé selon la revendication 9, **caractérisé en ce que** la plaque de support (5) est une plaque en matériau à base de bois.

11. Procédé selon la revendication 9 ou 10, **caractérisé en ce que** l'on utilise à titre d'imprimante numérique une imprimante à jet d'encre ou laser ou une combinaison des deux.
